# FASCICULE DE BREVET EUROPEEN

(11) **EP 3 161 270 B1**
(45) Date de publication et mention de la délivrance du brevet: **05.08.2020**
(21) Numéro de dépôt: 15738729.1
(22) Date de dépôt: 17.06.2015
(51) Int. Cl.: F01D 21/04, F02K 3/06, F02C 3/113, F02C 7/36

(54) **TURBOMACHINE COMPORTANT UN MOYEN DE DÉCOUPLAGE D'UNE SOUFFLANTE**
TURBOMASCHINE MIT EINEM MITTEL ZUR ENTKOPPLUNG EINES LÜFTERS
TURBOMACHINE COMPRISING MEANS FOR DECOUPLING A FAN

(30) Priorité: 25.06.2014 FR 1455939
(43) Date de publication de la demande: 03.05.2017
(73) Titulaire: Safran Aircraft Engines, 75015 Paris (FR)
(72) Inventeur: TAN-KIM, Alexandre, F-77550 Moissy-Cramayel Cedex (FR); BECOULET, Julien, Fabien, Patrick, F-77550 Moissy-Cramayel Cedex (FR)
(74) Mandataire: Gevers & Orès
(86) Numéro de dépôt international: PCT/FR2015/051614
(87) Numéro de publication internationale: WO 2015/197949

(56) Documents cités:
- EP-A2- 2 048 330
- GB-A- 2 377 731
- US-A1- 2013 014 513
- US-A1- 2013 324 343

## Description

Le domaine de la présente invention est celui des turbomachines aéronautiques et, plus particulièrement celui des turbomachines à double flux comportant un dispositif de réduction pour l'entraînement de la soufflante.

Classiquement, les turbomachines comprennent, en partant de l'amont, un ou plusieurs modules de compresseur disposés en série, qui compriment de l'air aspiré dans une entrée d'air. L'air est ensuite introduit dans une chambre de combustion où il est mélangé à un carburant et brûlé. Les gaz de combustion passent à travers un ou plusieurs modules de turbine qui entraînent le ou les compresseurs par l'intermédiaire d'arbres de turbine associés. Les gaz sont enfin éjectés soit dans une tuyère pour produire une force de propulsion soit sur une turbine libre pour produire de la puissance qui est récupérée sur un arbre de transmission.

Les turbomachines à double flux actuelles à fort taux de dilution comportent plusieurs étages de compresseur, notamment un compresseur basse pression (BP) et un compresseur haute pression (HP), traversés par un flux primaire. Ces compresseurs basse pression (BP) et haute pression (HP) sont chacun entrainés par un arbre de turbine basse pression (BP) ou haute pression (HP) respectif associé. En amont du compresseur basse pression (BP) est disposée une roue comportant des pales ou aubes mobiles de grande dimension, ou soufflante, qui alimente à la fois le flux primaire traversant les compresseurs BP et HP et un flux froid, ou flux secondaire, qui est dirigé directement vers une tuyère de flux froid, dite tuyère secondaire. La soufflante est entraînée par l'arbre de rotation de turbine BP du corps BP et tourne généralement à la même vitesse que lui.

Il peut être intéressant de faire tourner la soufflante à une vitesse de rotation inférieure à celle de l'arbre BP, notamment lorsque celle-ci est de très grande dimension, dans le but de mieux l'adapter aérodynamiquement. Pour cela, on dispose un dispositif de réduction entre l'arbre de turbine BP et un arbre de soufflante, qui est porteur de la soufflante. Une telle configuration est notamment décrite dans les demandes de brevet FR 1251655 et 1251656 déposées le 23 février 2012.

Dans cette configuration, il peut survenir que la soufflante perde une pale, par exemple en cas d'ingestion d'un corps étranger tel qu'un oiseau. Ce phénomène, aussi connu sous le vocable anglo-saxon appelé de « Fan Blade Out » (FBO) provoque une excentration de la soufflante ayant pour conséquence de provoquer un contact des extrémités de ses pales avec le carter de la soufflante. Ce contact peut freiner brutalement la soufflante alors même que le dispositif de réduction et l'arbre de turbine sont toujours entraînés par la turbine BP, ce qui peut créer un couple de torsion élevé dans l'arbre de turbine BP et dans le dispositif de réduction.

La torsion des arbres peut conduire à des ruptures des arbres en différents points de la turbomachine, comme cela est enseigné par le document EP-2.048.330-A2.

Le document EP-2.048.330-A2 divulgue une turbomachine comportant un arbre de soufflante et un arbre d'un compresseur entraînés chacun par un arbre de turbine par l'intermédiaire de deux chemins de couple différents accouplés à l'arbre de turbine au niveau d'une intersection agencée au niveau d'un palier. Le chemin de couple entraîne la soufflante par l'intermédiaire d'un dispositif de réduction. Les deux chemins de couple sont prévus pour que, en cas de rupture fortuite d'un des chemins de couple la turbine demeure en charge sur l'autre chemin de couple afin d'éviter les surrégimes de la turbine, pendant qu'une unité de contrôle de la turbine peut réduire le régime de la turbine. La turbomachine décrite dans ce document part du constat qu'un possible dysfonctionnement mécanique des chemins de couple peut se produire, comme par exemple celui qui lie l'arbre de turbine à la soufflante. Toutefois ce document ne précise pas explicitement la nature de ce dysfonctionnement, qui peut ou non consister en une rupture, mais qui est en tous cas fortuit et non prévisible. Dans le cas d'une rupture du chemin de couple l'arbre de turbine à la soufflante, cette rupture fortuite intervient alors que le dispositif de réduction a d'ores et déjà été soumis à des couples importants et a vraisemblablement déjà été endommagé.

En effet, un tel couple de torsion en cas de perte de pale risque aussi d'endommager gravement le dispositif de réduction, qui pourrait alors se bloquer et rendre la rotation de la soufflante impossible. Ceci aurait pour conséquence d'augmenter brutalement la trainée aérodynamique du moteur, rendant l'avion impossible à piloter.

Pour remédier à cet inconvénient, une solution consiste à limiter le couple de torsion susceptible de transiter dans le dispositif de réduction et dans l'arbre de turbine BP, afin d'éviter le blocage de la soufflante.

Par ailleurs, la limitation de ce couple permet d'éviter tout surdimensionnement des organes du dispositif de réduction et de l'arbre de turbine basse pression, et par conséquent d'alléger la conception du dispositif de réduction et de l'arbre de turbine BP.

Dans ce but, l'invention propose une turbomachine selon la revendication 1.

Avantageusement, le découplage est donc un événement prévu en réponse au dépassement d'un couple résistant déterminé exercé par le dispositif de réduction sur l'arbre de turbine, c'est-à-dire conditionné par le dépassement de ce couple résistant.

Selon l'invention un arbre d'entrée du dispositif de réduction comporte un tronçon d'extrémité tubulaire qui est accouplé avec un tronçon d'extrémité tubulaire complémentaire de l'arbre de turbine par l'intermédiaire d'au moins un élément radial apte à être rompu lorsqu'il est soumis à une contrainte de cisaillement correspondant au couple résistant de découplage.

Dans cette configuration, l'élément radial comporte un pion qui est reçu dans un orifice radial du tronçon d'extrémité de l'arbre d'entrée et dans un orifice en regard du tronçon d'extrémité de l'arbre de turbine.

De manière préférentielle de l'invention, l'élément de liaison fusible est apte à être rompu dès lors qu'il est soumis à un couple résistant de découplage déterminé correspondant à un couple résistant exercé par la soufflante sur le dispositif de réduction de vitesse en cas de perte d'au moins une pale d'une soufflante entraînée par ledit arbre de soufflante.

Par ailleurs, l'élément de liaison fusible est apte à être rompu dès lors qu'il est soumis à un couple résistant qui est strictement supérieur à tout couple correspondant à un couple résistant exercé par la soufflante sur le dispositif de réduction de vitesse en cas d'ingestion d'un oiseau sans perte de pale par ladite soufflante.

L'élément de liaison fusible peut être associé à une soufflante comportant des pales métalliques. Dans ce cas, l'élément fusible est apte à être rompu dès lors qu'il est soumis à un couple de découplage de 120 à 140% d'un couple normal en régime maximal de la turbomachine.

De même, l'élément de liaison fusible peut être associé à une soufflante comportant des pales en matériau composite. Dans ce cas, l'élément fusible est apte à être rompu dès lors qu'il est soumis à un couple de découplage de 130 à 170% d'un couple normal en régime maximal de la turbomachine.

Enfin, afin d'éviter un emballement des turbines en cas de découplage, la turbomachine selon l'invention comporte avantageusement des moyens de détection du découplage du dispositif de réduction et de l'arbre de turbine aptes à commander une réduction de vitesse de la turbine et/ou un arrêt de la turbomachine.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés dans lesquels :
- la figure 1 est une vue d'ensemble d'une turbomachine selon un état antérieur de la technique ;
- la figure 2A est une vue en coupe de la partie avant d'une turbomachine selon un premier mode de réalisation qui ne fait pas partie de l'invention équipée d'un dispositif de réduction ;
- la figure 2B est une vue de détail de la figure 2A ;
- la figure 3A est une vue en coupe de la partie avant d'une turbomachine selon un second mode de réalisation de l'invention équipée d'un dispositif de réduction ;
- la figure 3B est une vue de détail de la figure 3A,
- la figure 4 est un diagramme illustrant le couple résistant exercé par le dispositif de réduction de vitesse sur l'arbre de turbine en fonction du temps lors de la perte d'une pale de la soufflante.

Dans la description qui va suivre, des chiffres de référence identiques désignent des pièces identiques ou ayant des fonctions similaires.

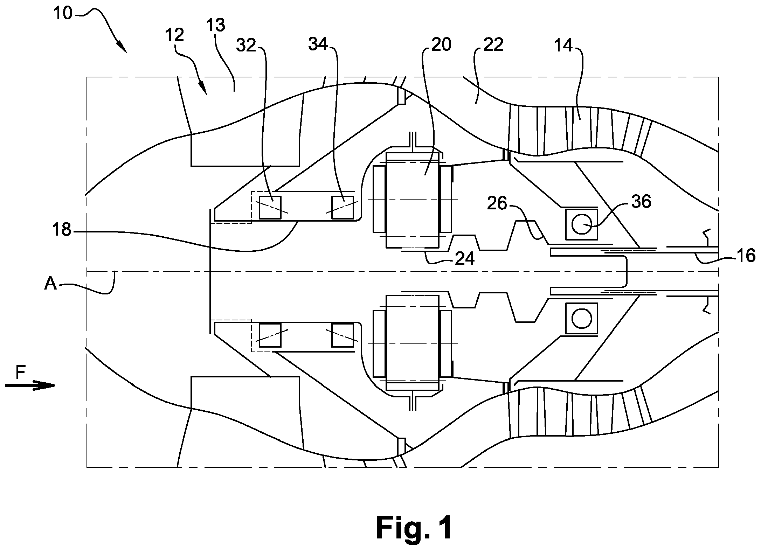

On a représenté à la figure 1 une turbomachine telle qu'un turboréacteur 10 réalisé selon un état antérieur de la technique. De manière connue, le turboréacteur 10 comporte, d'amont en aval selon le flux "F" d'écoulement des gaz, une soufflante 12, un compresseur basse pression 14, un compresseur haute pression, une chambre de combustion, une turbine haute pression et une turbine basse pression (non représentés). La soufflante 12 comporte des pales 13. Le compresseur haute pression et la turbine haute pression sont reliés par un arbre haute pression et forment avec lui un corps haute pression. Le compresseur basse pression 14 et la turbine basse pression sont reliés par un arbre basse pression 16 et forment avec lui un corps basse pression. La soufflante 12 est, quant à elle, portée par un arbre de soufflante 18 qui, dans l'exemple représenté, est lié en rotation à l'arbre BP 16, par l'intermédiaire d'un dispositif de réduction 20 de la vitesse de rotation entre les deux arbres 16, 18.

En effet, il est intéressant de faire tourner la soufflante 12 à une vitesse de rotation inférieure à celle de l'arbre BP 16, notamment lorsque celle-ci est de très grande dimension, dans le but de mieux l'adapter aérodynamiquement.

Les arbres HP et BP 16 s'étendent suivant un axe "A" de rotation du turboréacteur 10.

Le turboréacteur 10 comprend également, classiquement, un carter de soufflante (non représenté) qui permet de canaliser les gaz aspirés par la soufflante 12 vers une veine 22 de flux primaire, qui traverse les corps BP et HP, et une veine de flux secondaire (non représentée) qui enveloppe un carter des corps BP et HP et rejoint la veine de flux primaire dans une tuyère (non représentée) du turboréacteur.

Comme l'illustre la figure 1, le dispositif de réduction 20 est positionné entre l'arbre 18 de soufflante et l'arbre BP 16. Ce dispositif de réduction, par exemple de type épicycloïdal, est représenté sous la forme schématique de rectangles ne montrant que son encombrement. Il est entraîné par un pignon planétaire 24 porté par un arbre d'entrée 26 qui est lié en rotation à l'arbre BP 16, l'arbre 16 étant, à titre d'exemple uniquement, reçu sans jeu par emmanchement dans l'arbre 26.

Dans cette configuration, il peut survenir que la soufflante 12 perde une pale 13, par exemple en cas d'ingestion d'un corps étranger tel qu'un oiseau ou par suite d'une rupture en fatigue résultant d'une maintenance inadaptée. Ce phénomène, aussi connu sous le vocable anglo-saxon appelé de « Fan Blade Out » (FBO) provoque une excentration de la soufflante 12 par rapport à l'axe "A", qui a pour conséquence de provoquer un contact des extrémités de ses pales 13 avec le carter (non représenté) de la soufflante 12. Ce contact peut freiner brutalement la soufflante 12 alors même que le dispositif de réduction 20 et l'arbre de turbine BP 16 sont toujours entraînés par la turbine BP, ce qui peut créer un couple de torsion élevé dans l'arbre de turbine BP 16 et dans le dispositif de réduction 20.

Un tel couple de torsion en cas de perte d'une pale 13 risque d'endommager gravement le dispositif de réduction 20, qui pourrait alors se bloquer et rendre la rotation de la soufflante impossible 12. Ceci aurait pour conséquence d'augmenter brutalement la trainée aérodynamique du moteur, rendant l'avion impossible à piloter.

Pour remédier à cet inconvénient, une solution consiste à limiter le couple de torsion susceptible de transiter dans le dispositif de réduction 20 et dans l'arbre de turbine BP 16, afin d'éviter le blocage de la soufflante 12.

La limitation du couple de torsion présente un autre avantage, qui est de permettre d'éviter un surdimensionnement des organes du dispositif de réduction 20 et de l'arbre de turbine BP 16 propre à assurer leur résistance à un tel couple de torsion lors du dépassement d'un couple résistant déterminé exercé par le dispositif de réduction de vitesse 20 sur l'arbre de turbine 16.

Par ailleurs, la limitation de ce couple permet d'éviter tout surdimensionnement des organes du dispositif de réduction 20 et de l'arbre 16 de turbine basse pression, et par conséquent d'alléger la conception du dispositif de réduction 20 et de l'arbre 16 de turbine BP.

Dans ce but, l'invention propose une turbomachine selon la revendication 1.

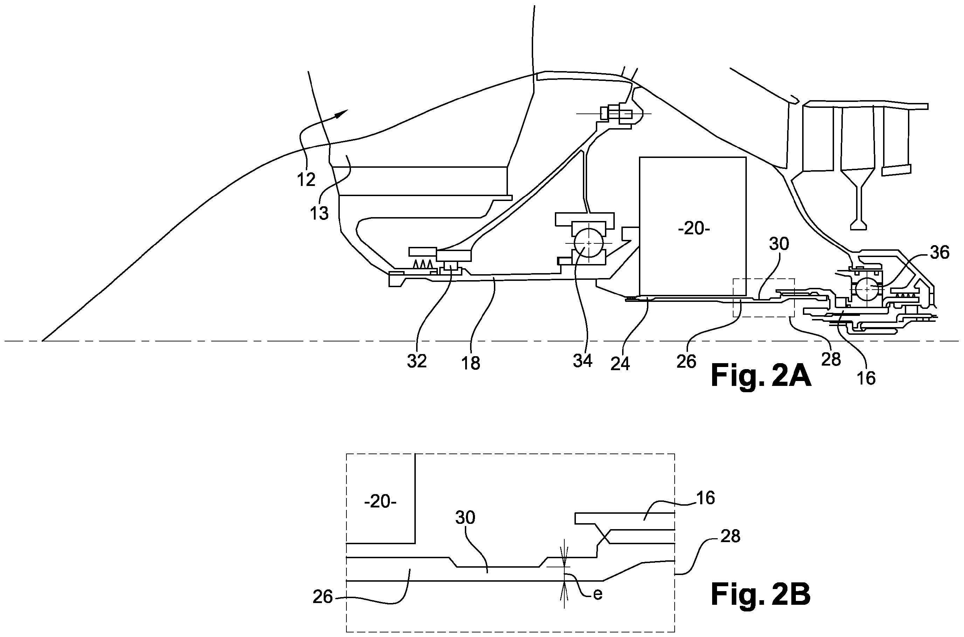

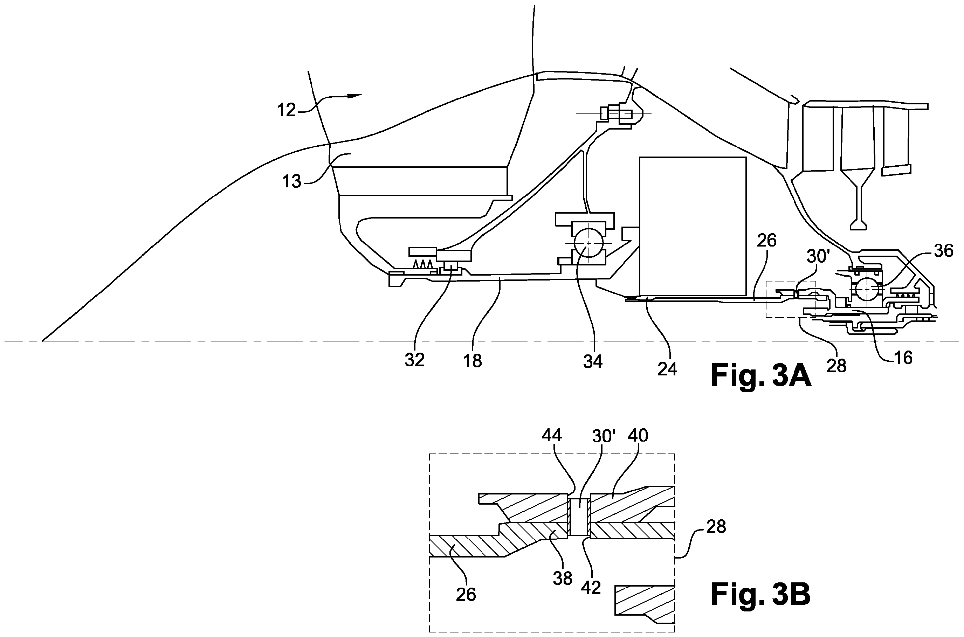

Plus particulièrement, comme l'illustrent les figures 2A et 3A, le moyen 28 de découplage comporte au moins un élément 30, 30' de liaison fusible qui est interposé entre le dispositif 20 de réduction et l'arbre 16 de turbine et qui est apte à être rompu lorsqu'il est soumis à un couple résistant dit de découplage exercé par le dispositif de réduction de vitesse sur l'arbre de turbine, et qui correspond notamment à un couple résistant déterminé exercé par la soufflante 12 sur le dispositif 20 de réduction de vitesse, puis transmis par ledit dispositif de réduction de vitesse.

Le positionnement de l'élément 30, 30' de liaison fusible entre le dispositif 20 de réduction et l'arbre 16 de turbine présente plusieurs avantages.

En premier lieu, ce positionnement de l'élément 30, 30' de liaison fusible entre le dispositif 20 de réduction et l'arbre 16 de turbine est aisé à réaliser au niveau du dispositif 20 de réduction car l'arbre 18 de la soufflante est supporté par deux paliers 32, 34, et car l'arbre 16 de la turbine BP est lui aussi supporté par deux paliers, dont un seul palier 36 a été représenté sur les figures 2A, 3A. La rupture de l'élément 30, 30' fusible n'a donc pas d'incidence sur le maintien en rotation de l'arbre 16 de turbine BP ou l'arbre 18 de la soufflante.

En deuxième lieu, le découplage du dispositif 20 de réduction et de l'arbre 16 de turbine implique une vitesse de rotation libre de la soufflante 12 après l'arrêt du turboréacteur supérieure à un celle qu'aurait la même soufflante dans un turboréacteur conventionnel où le turboréacteur serait arrêté sans que la soufflante 12 ne soit découplée. Ainsi, la soufflante est soumise à une vitesse de rotation libre ou "windmilling" qui permet au turboréacteur de ne produire qu'une traînée réduite.

En troisième lieu, le positionnement de l'élément 30, 30' de liaison fusible entre le dispositif 20 de réduction et l'arbre 16 de turbine permet, comme on le verra ultérieurement dans la suite de la présente description, de protéger le dispositif 20 de réduction en cas de survitesse de l'arbre 16 de la turbine.

Selon un premier mode de réalisation qui ne fait pas partie de l'invention et qui a été représenté à la figure 2A et en particulier à la figure 2B, l'élément fusible est constitué d'un tronçon 30 de l'arbre d'entrée 26 du dispositif de réduction lié à l'arbre 16 du turbine. Ce tronçon 30 est apte à être rompu lorsqu'il est soumis à un couple de torsion maximal correspondant au couple résistant de découplage déterminé exercé par le dispositif de réduction 20 sur l'arbre 16.

Toute solution connue de l'état de la technique peut convenir à la bonne réalisation d'un tronçon 30 de rigidité torsionnelle réduite. En particulier, le tronçon peut être un tronçon tubulaire d'épaisseur "e" réduite, comme représenté à la figure 2A. Il peut aussi s'agir d'un tronçon 30 ajouré et/ou comportant des zones d'amorce de rupture (non représentées).

Selon un second mode de réalisation conforme à l'invention et qui a été représenté à la figure 3A et en particulier à la figure 3B, l'arbre d'entrée 26 du dispositif de réduction comporte un tronçon d'extrémité tubulaire 38 qui est accouplé avec un tronçon d'extrémité 40 tubulaire complémentaire de l'arbre de turbine 16 par l'intermédiaire d'au moins un élément radial 31, formant l'élément de liaison fusible. Cet élément radial 31 est apte à être rompu lorsqu'il est soumis à une contrainte de cisaillement correspondant au couple résistant de découplage.

Il sera compris que l'élément radial 31 formant l'élément fusible peut être conformé selon de nombreux modes de réalisation. Toutefois, de manière préférentielle de l'invention, l'élément radial 31 est constitué d'un pion, notamment cylindrique qui est reçu dans un orifice 42 radial du tronçon d'extrémité de l'arbre d'entrée 26 et dans un orifice 44 en regard du tronçon d'extrémité de l'arbre 16 du turbine.

Dans chacun de ces deux modes de réalisation, il sera compris que le positionnement de l'élément 30, 31 de liaison fusible sur l'arbre d'entrée permet d'assurer le support du planétaire 24 du dispositif de réduction après le découplage.

En effet, le planétaire 24 est supporté via le porte-satellites par l'arbre de sortie (non représentés) du dispositif de réduction 20.

Dans chacun de ces deux modes de réalisation, l'élément fusible 30 est calibré pour se rompre lorsque respectivement le tronçon 30 ou le pion 31 est soumis à un couple de découplage correspondant à couple résistant exercé par la soufflante sur le dispositif 20 de réduction de vitesse en cas de perte d'au moins une pale 13 de la soufflante entraînée par ledit arbre 18 de soufflante, et transmis par le dispositif 20 de réduction.

Ainsi la rupture est-elle prévue a minima et ce, dès la perte d'une seule pale 13.

Inversement, il est prévu que la rupture ne survienne qu'en cas de rupture ou de perte d'une pale 13, et non en cas de simple ralentissement de la soufflante 12.

Ainsi, il est prévu que le couple résistant déterminé soit strictement supérieur à tout couple correspondant à un couple résistant exercé par la soufflante 12 sur le dispositif 20 de réduction de vitesse et transmis par le dispositif 20, en cas d'ingestion d'un oiseau sans perte de pale par ladite soufflante 12, un tel évènement pouvant produire un effort tangentiel ralentissant la soufflante 12, mais qui ne risquant pas d'endommager le dispositif de réduction 20 ni de bloquer la chaine cinématique considérée.

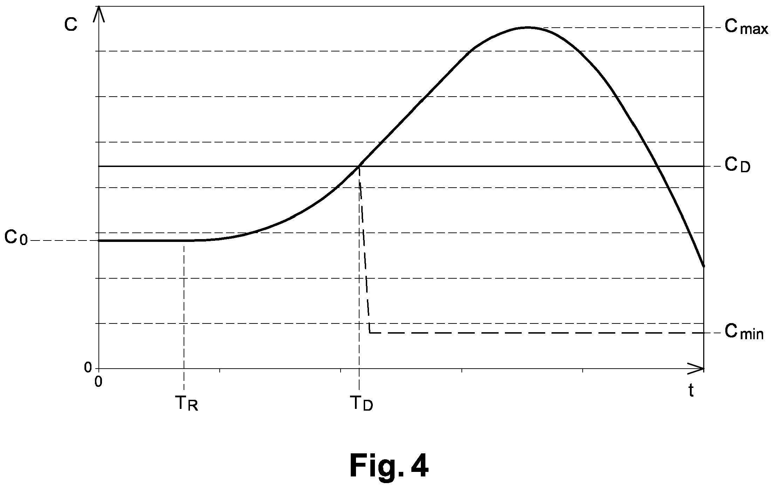

La figure 4 illustre de manière comparative le couple résistant "C" transmis, en ordonnées, en fonction du temps "t" en abscisses, en cas de rupture d'une pale 13 de soufflante.

Comme on peut le voir sur la courbe en traits forts, dans une turbomachine conventionnelle, à partir d'un couple de fonctionnement optimal C₀, il peut survenir à un instant T_{R} une rupture d'une pale 13. Cette rupture conduit à une augmentation du couple résistant jusqu'à une valeur limite Cₘₐₓ correspondant au blocage du dispositif 20 de réduction et de la soufflante 12, ou plus exactement à un risque de blocage selon les spécifications du dispositif de réduction, rendant celui-ci impropre à son utilisation.

Dans la turbomachine selon l'invention, le couple maximal est taré à un couple C_{D} ou couple de découplage. De ce fait, lors du fonctionnement, il peut aussi survenir à un instant T_{R} une rupture d'une pale 13, qui conduit à une augmentation du couple résistant jusqu'à la valeur C_{D} ou valeur de couple de découplage. Le couple décroit alors, selon la courbe en pointillés, jusqu'à une valeur Cₘᵢₙ correspondant à un état de libre rotation de la soufflante 12.

A titre d'exemple, et de manière non limitative de l'invention, un ordre de grandeur du couple de découplage transmis déterminé, lorsque la soufflante comporte des pales métalliques, est de 120 à 140% d'un couple normal en régime maximal de la turbomachine.

Lorsque la soufflante comporte des pales en matériau composite, un ordre de grandeur du couple de découplage transmis déterminé est de 130 à 170% d'un couple normal en régime maximal de la turbomachine.

A titre d'exemple uniquement, et de manière non limitative de l'invention, la valeur du couple de découplage transmis déterminé dans ces deux cas varie donc sensiblement entre 50000 Nm et 400000 Nm.

Il sera bien entendu compris que ces valeurs ne sont qu'indicatives et dépendent tant du type de pale utilisée, que de l'architecture et du dimensionnement du moteur.

Il sera compris qu'à partir du moment où la soufflante est découplée de l'arbre 16 de turbine, la turbine n'est plus soumise à un couple résistant issu de ladite soufflante. Il y a donc un risque d'emballement de la turbine.

On remarquera qu'un autre avantage essentiel du positionnement de l'élément 30, 30' de liaison fusible entre le dispositif 20 de réduction et l'arbre 16 de turbine est de permettre de protéger le dispositif 20 de réduction en cas d'emballement de la turbine, celui-ci ne risquant plus d'être soumis à des vitesses de rotation élevées pour lesquelles il ne serait pas prévu.

Toutefois, conformément à l'invention, la turbomachine ou turboréacteur 10 comporte des moyens de détection du découplage du dispositif de réduction 20 et de l'arbre de turbine 16 aptes à commander au minimum une réduction de vitesse de la turbine, voire un arrêt complet du turboréacteur.

Ainsi, il est connu de mesurer la vitesse de l'arbre de turbine par un capteur de vitesse. Une détection de l'emballement de la vitesse mesurée peut ainsi être interprétée comme un découplage et déclencher l'activation d'organes de régulation du moteur. Il est dès lors possible de limiter le débit de carburant pour faire chuter la vitesse de la turbine, ou, si l'on dispose d'une turbine comprenant un frein axial entre une partie de rotor et une partie de stator, d'activer ce frein pour ralentir et/ou arrêter la turbine.

L'invention apporte donc une solution sécuritaire aux risques de rupture de pale de soufflante d'une turbomachine.

Enfin, l'invention permet aussi, par une limitation du couple transmis, d'éviter tout surdimensionnement des organes du dispositif de réduction 20 et de l'arbre 16 de turbine basse pression afin de pallier aux risques connus d'augmentation dudit couple en cas de perte de pale. Ces organes ne nécessitant plus d'être surdimensionnés pour répondre à des contraintes de torsion élevées, ils peuvent voir leur dimensionnement réduit, ce qui a pour conséquence d'alléger globalement la conception du dispositif de réduction 20 et de l'arbre 16 de turbine BP.

## Revendications

1. Turbomachine (10) comportant un arbre de soufflante (12) entraîné par un arbre de turbine (16) par l'intermédiaire d'un dispositif (20) de réduction de la vitesse de rotation, un moyen (28) de découplage interposé entre le dispositif (20) de réduction et l'arbre (16) de turbine, qui est apte à découpler le dispositif (20 de réduction et l'arbre (16) de turbine en réponse au dépassement d'un couple résistant déterminé exercé par le dispositif (20) de réduction sur l'arbre (16) de turbine, le moyen (28) de découplage comportant au moins un élément (30') de liaison fusible qui est interposé entre le dispositif (20) de réduction et l'arbre (16) de turbine et qui est apte à être rompu lorsqu'il est soumis à un couple résistant (C_{D}) dit de découplage exercé par le dispositif (20) de réduction de vitesse sur l'arbre de turbine (16), un arbre d'entrée (26) du dispositif (20) de réduction comportant un tronçon d'extrémité tubulaire (38) qui est accouplé avec un tronçon d'extrémité tubulaire (40) complémentaire de l'arbre (16) de turbine, **caractérisée en ce que** lesdits tronçons sont accouplés par l'intermédiaire d'au moins un élément radial (30') de liaison fusible apte à être rompu lorsqu'il est soumis à une contrainte de cisaillement correspondant au couple résistant (C_{D}) de découplage.

2. Turbomachine (10) selon la revendication précédente, **caractérisée en ce que** l'élément radial comporte un pion (30') qui est reçu dans un orifice radial (42) du tronçon (38) d'extrémité de l'arbre d'entrée (26) et dans un orifice (44) en regard du tronçon d'extrémité (40) de l'arbre (16) de turbine.

3. Turbomachine (10) selon l'une des revendications précédentes, **caractérisée en ce que** l'élément (30') de liaison fusible est apte à être rompu dès lors qu'il est soumis à un couple résistant de découplage (C_{D}) correspondant à un couple résistant exercé par la soufflante sur le dispositif de réduction de vitesse en cas de perte d'au moins une pale d'une soufflante entraînée par ledit arbre de soufflante.

4. Turbomachine (10) selon l'une des revendications précédentes, **caractérisée en ce que** l'élément (30') de liaison fusible est apte à être rompu dès lors qu'il est soumis à un couple résistant (C_{D}) qui est strictement supérieur à tout couple correspondant à un couple résistant exercé par la soufflante (12) sur le dispositif (20) de réduction de vitesse en cas d'ingestion d'un oiseau sans perte de pale par ladite soufflante (12) .

5. Turbomachine (10) selon l'une des revendications 3 ou 4, **caractérisée en ce que** l'élément (30') de liaison fusible est associé à une soufflante comportant des pales métalliques et **en ce qu'**il est apte à être rompu dès lors qu'il est soumis à un couple résistant (C_{D}) de découplage compris entre 120 et 140% d'un couple normal en régime maximal de la turbomachine.

6. Turbomachine (10) selon l'une des revendications 3 ou 4, **caractérisée en ce que** l'élément (30') de liaison fusible est associé à une soufflante comportant des pales en matériau composite et **en ce qu'**il est apte à être rompu dès lors qu'il est soumis à un couple résistant (C_{D}) de découplage compris entre 130 et 170% d'un couple normal en régime maximal de la turbomachine.

7. Turbomachine (10) selon l'une des revendications précédentes, **caractérisée en ce qu'**elle comporte des moyens de détection du découplage du dispositif (20) de réduction et de l'arbre (16) de turbine aptes à commander une réduction de vitesse de la turbine et/ou un arrêt de la turbomachine (10).

## Patentansprüche

1. Turbomaschine (10), das eine Gebläsewelle (12) umfasst, die von einer Turbinenwelle (16) über eine Drehzahlreduktionsvorrichtung (20) angetrieben ist,
ein Entkopplungsmittel (28), das zwischen der Drehzahlreduktionsvorrichtung (20) und der Turbinenwelle (16) eingefügt ist, das dazu geeignet ist, die Drehzahlreduktionsvorrichtung (20) und die Turbinenwelle (16) als Reaktion auf das Überschreiten eines bestimmten Gegenmoments, das von der Drehzahlreduktionsvorrichtung (20) auf die Turbinenwelle (16) ausgeübt wird, zu entkoppeln,
wobei das Entkopplungsmittel (28) mindestens ein schmelzbares Verbindungselement (30') umfasst, das zwischen der Drehzahlreduktionsvorrichtung (20) und der Turbinenwelle (16) eingefügt ist, und das dazu geeignet ist, gebrochen zu werden, wenn es einem Gegenmoment (C_{D}), Entkopplungsmoment genannt, das von der Drehzahlreduktionsvorrichtung (20) auf die Turbinenwelle (16) ausgeübt wird, unterworfen ist,
wobei eine Eingangswelle (26) der Drehzahlreduktionsvorrichtung (20) einen röhrenförmigen Endabschnitt (38) umfasst, der mit einem komplementären röhrenförmigen Endabschnitt (40) der Turbinenwelle (16) gekoppelt ist, **dadurch gekennzeichnet, dass** die Endabschnitte über mindestens ein schmelzbares radiales Verbindungsmittel (30') gekoppelt sind, das dazu geeignet ist, gebrochen zu werden, wenn es einer Scherbelastung, die dem Entkopplungsgegenmoment (C_{D}) entspricht, unterworfen ist.

2. Turbomaschine (10) nach dem vorstehenden Anspruch, **dadurch gekennzeichnet, dass** das radiale Element einen Zapfen (30') umfasst, der in einer radialen Öffnung (42) des Endabschnitts (38) der Eingangswelle (26) und in einer Öffnung (44) gegenüber dem Endabschnitt (40) der Turbinenwelle (16) aufgenommen ist.

3. Turbomaschine (10) nach einem der vorstehenden Ansprüche, **dadurch gekennzeichnet, dass** das schmelzbare Verbindungselement (30') dazu angepasst ist, gebrochen zu werden, sobald es einem Entkopplungsgegenmoment (C_{D}) unterworfen ist, das einem Gegenmoment entspricht, das von dem Gebläse auf die Drehzahlreduktionsvorrichtung bei Verlust mindestens einer Schaufel eines Gebläses, das von der Gebläsewelle angetrieben wird, ausgeübt wird.

4. Turbomaschine (10) nach einem der vorstehenden Ansprüche, **dadurch gekennzeichnet, dass** das schmelzbare Verbindungselement (30') dazu geeignet ist, gebrochen zu werden, sobald es einem Gegenmoment (C_{D}) unterworfen ist, das strikt größer ist als jedes Moment, das einem Gegenmoment entspricht, das von dem Gebläse (12) auf die Drehzahlreduktionsvorrichtung (20) im Fall des Eindringens eines Vogels ohne Schaufelverlust durch das Gebläse (12) ausgeübt wird.

5. Turbomaschine (10) nach einem der Ansprüche 3 oder 4, **dadurch gekennzeichnet, dass** das schmelzbare Verbindungselement (30') mit einem Gebläse assoziiert ist, das Metallschaufeln umfasst, und dass es dazu geeignet ist, gebrochen zu werden, sobald es einem Entkopplungsgegenmoment (C_{D}) unterworfen ist, das zwischen 120 und 140 % eines normalen Moments bei maximaler Drehzahl des Turbostrahltriebwerks liegt.

6. Turbomaschine (10) nach einem der Ansprüche 3 oder 4, **dadurch gekennzeichnet, dass** das schmelzbare Verbindungselement (30') mit einem Gebläse assoziiert ist, das Schaufeln aus Verbundwerkstoff umfasst, und dadurch, dass es dazu geeignet ist, gebrochen zu werden, sobald es einem Entkopplungsgegenmoment (C_{D}) unterworfen ist, das zwischen 130 und 170 % eines normalen Drehmoments bei maximaler Drehzahl des Turbostrahltriebwerks liegt.

7. Turbomaschine (10) nach einem der vorstehenden Ansprüche, **dadurch gekennzeichnet, dass** es Mittel zum Erfassen des Entkoppelns der Drehzahlreduktionsvorrichtung (20) und der Turbinenwelle (16) umfasst, die dazu geeignet sind, eine Drehzahlreduktion der Turbine und/oder ein Stoppen des Turbostrahltriebwerks (10) anzuordnen.

## Claims

1. A turbomachine (10) including a fan shaft (12) driven by a turbine shaft (16) via a device (20) for reducing the speed of rotation, an uncoupling means (28) interposed between the reduction device (20) and the turbine shaft (16), which is able to uncouple the reduction device (20) and the turbine shaft (16) in response to the exceeding of a determined resistant torque (C_{D}) called uncoupling torque exerted by the reduction device (20) on the turbine shaft (16),
the uncoupling means (28) including at least one fuse connecting element (30') which is interposed between the reduction device (20) and the turbine shaft (16) and which is able to be broken when it is subjected to the resistant uncoupling torque (C_{D}) exerted by the speed reduction device (20) on the turbine shaft (16),
an input shaft (26) of the reduction device (20) including a tubular end segment (38) which is coupled with a complementary tubular end segment (40) of the turbine shaft (16), **characterised in that** said segments are coupled via at least one radial fuse connecting element (30') able to be broken when it is subject to a shear stress corresponding to the resistant uncoupling torque (C_{D}).

2. The turbomachine (10) according to the preceding claim, **characterized in that** the radial fuse connecting element (30') includes a pin which is received in a radial orifice (42) of the end segment (38) of the input shaft (26) and into an orifice (44) facing the end segment (40) of the turbine shaft (16).

3. The turbomachine (10) according to one of the preceding claims, **characterized in that** the fuse connecting element (30) is able to be broken as soon as it is subject to a resistant uncoupling torque (C_{D}) corresponding to a resistant torque exerted by the fan on the speed reduction device in the case of loss of at least one blade of a fan driven by said fan shaft.

4. The turbomachine (10) according to one of the preceding claims, **characterized in that** the fuse connecting element (30') is able to be broken as soon as it is subject to a resistant torque (C_{D}) which is strictly greater than any torque corresponding to a resistant torque exerted by the fan (12) on the speed reduction device (20) in the case of ingestion of a bird without any blade loss by said fan (12).

5. The turbomachine (10) according to one of claims 3 or 4, **characterized in that** the fuse connecting element (30) is associated with a fan including metal blades and **in that** it is capable of being broken as soon as it is subject to a resistant uncoupling torque (C_{D}) comprised between 120 and 140% of a normal torque under maximum speed conditions of the turbomachine.

6. The turbomachine (10) according to one of claims 3 or 4, **characterized in that** the fuse connecting element (30) is associated with a fan including composite blades and **in that** it is capable of being broken as soon as it is subject to a resistant uncoupling torque (C_{D}) comprised between 130 and 170% of a normal torque under maximum speed conditions of the turbomachine.

7. The turbomachine (10) according to one of the preceding claims, **characterized in that** it includes means for detecting uncoupling of the reduction device (20) and of the turbine shaft (16) able to control a reduction of speed of the turbine and/or a stopping of the turbomachine (10).
coupling means.
